# EUROPÄISCHE PATENTSCHRIFT

(11) **EP 3 348 979 B1**
(45) Veröffentlichungstag und Bekanntmachung des Hinweises auf die Patenterteilung: **14.04.2021**
(21) Anmeldenummer: 18151003.3
(22) Anmeldetag: 10.01.2018
(51) Int. Cl.: G01L 1/04, G01L 1/26

(54) **TAKTILER SENSOR MIT GEHÄUSE**
TACTILE SENSOR WITH HOUSING
CAPTEUR TACTILE POURVU DE BOÎTIER

(30) Priorität: 17.01.2017 DE 102017100786
(43) Veröffentlichungstag der Anmeldung: 18.07.2018
(73) Patentinhaber: Pilz GmbH & Co. KG, 73760 Ostfildern (DE)
(72) Erfinder: Ibrocevic, Onedin, 73760 Ostfildern (DE); Kuczera, Matthias, 73760 Ostfildern (DE)
(74) Vertreter: Witte, Weller & Partner Patentanwälte mbB

(56) Entgegenhaltungen:
- EP-A1- 1 739 401
- EP-A1- 2 762 065
- DE-U1-202006 010 582
- US-A- 3 433 064
- US-A1- 2002 134 116

## Beschreibung

Die vorliegende Erfindung betrifft einen taktilen Sensor mit Gehäuse sowie Mittel zum Verschließen einer Öffnung unter Verwendung eines solchen.

Es ist bekannt, automatische Türen, Tore oder Fenster in der Gebäudetechnik oder Fahrzeugtüren im öffentlichen Personenverkehr mit einem Einklemmschutz zu versehen. Der Einklemmschutz verhindert, dass Hindernisse an Scher- und Quetschkanten eingeklemmt werden, indem beim Erkennen von Hindernissen die gefahrbringende Bewegung gestoppt oder umgekehrt wird.

Einfachere Systeme realisieren einen Einklemmschutz teilweise mechanisch über Rück- bzw. Reibkupplungen. Bei komplexeren oder komfortableren Systemen mit automatischer Schließfunktion erfolgt ein Einklemmschutz, indem das Antriebsmoment in Abhängigkeit zur Fensterposition bestimmt wird. Wird dabei ein bestimmter Grenzwert des Antriebsmoments überschritten, wird die Bewegung gestoppt oder die Bewegungsrichtung umgekehrt, um ein Hindernis wieder freizugeben. Dabei muss über die Position des Fensters oder der Tür bestimmt werden, ob ein Hindernis vorliegt oder ob eine definierte Endposition erreicht ist. Üblicherweise wird die Einklemmschutzfunktion unmittelbar über die Antriebssteuerung realisiert, wobei die Fensterposition über Hallsensoren an der Motorachse bestimmt werden kann.

Darüber hinaus ist es bekannt, als Einklemmschutz sogenannte Schaltleisten zu verwenden. Schaltleisten sind Sensoren, die entlang von Quetsch- und Scherkanten angeordnet sind und unmittelbar ein Hindernis an den Kanten detektieren können. Gegenüber der zuerst genannten Einklemmschutzvorrichtung haben Schaltleisten den Vorteil, dass sie ein Hindernis direkt erkennen und nicht nur indirekt. Je nach Schaltprinzip weisen die Schaltleisten zwei leitfähige Schichten, eine Öffnerkette oder einen optoelektronischen Sensor auf, die beim Auftreffen auf ein Hindernis über eine entsprechende Steuerung einen sofortigen Stopp oder eine Umkehrung der gefährlichen Bewegung veranlassen. Schaltleisten können dabei sowohl an der beweglichen Kante angeordnet sein oder aber am jeweiligen Anschlag der beweglichen Kante. Bekannte Schaltleisten haben jedoch den Nachteil, dass sie nur bedingt biegsam sind und somit im Wesentlichen nur gradlinige Kanten absichern können.

Darüber hinaus ist im industriellen Umfeld bekannt, Quetsch- und Scherkanten mittels optischer Sensoren, wie beispielsweise Lichtschranken und Lichtgitter, berührungslos abzusichern. Lichtgitter und Lichtschranken haben jedoch den Nachteil, dass sie im Prinzip nur gradlinige Kanten zuverlässig absichern können. Andere optische Systeme wiederum, die eine Objekterkennung auf Basis von Bildverarbeitung durchführen, sind für die Verwendung als Einklemmschutz in der Regel überdimensioniert und zu teuer.

US 3 433 064 A zeigt grundsätzlich ein Gehäuse mit einem Kompressionskörper.

EP 1 739 401 zeigt einen Kraftsensor mit einem Kraftsensorchip und einer Puffervorrichtung zum Dämpfen einer ankommenden äußeren Kraft auf den Kraftsensorchip. Die Puffervorrichtung umfasst einen Eingangsabschnitt, auf den eine äußere Kraft auftrifft, eine Sensorhalterung zum Befestigen des Kraftsensorchips an der Außenseite, einen Dämpfungsmechanismus zum Dämpfen der äußeren Kraft sowie einen Übertragungsabschnitt zum Übertragen der gedämpften äußeren Kraft auf den Erfassungsabschnitt. US 2002/134116 A1 zeigt einen Sensor, der aus elektrisch leitfähigem Gewebe konstruiert ist. Als Reaktion auf eine mechanische Wechselwirkung nimmt der Sensor eine unterschiedliche elektrische Eigenschaft ein. Der Sensor umfasst eine erste leitende Schicht und eine zweite leitende Schicht, die voneinander beabstandet sind und nur dann elektrisch leitend verbunden sind, wenn die Schichten mechanisch aufeinander gepresst werden

Ein flexibles Gehäuse ist aus DE 202006010582 U1 bekannt.

Vor diesem Hintergrund ist es eine Aufgabe der vorliegenden Erfindung, einen taktilen Sensor zum Überwachen von Quetsch- und Scherkanten anzugeben, der einfacher realisiert werden kann und sowohl in Längs- als auch in Querrichtung biegsam ist, um gebogene oder auch gekrümmte Kanten absichern zu können. Gleichzeitig ist es Aufgabe einen kostengünstigen und flexibel einsetzbaren Sensor anzugeben, der leicht montiert werden kann.

Gelöst wird die Aufgabe durch einen taktilen Sensor gemäß Anspruch 1.

Es ist somit eine Idee der vorliegenden Erfindung, einen taktilen Sensor mit einer Sensoreinheit anzugeben, die in einem entsprechenden Gehäuse angeordnet ist.

Die erfindungsgemäße Sensoreinheit ist ein mehrschichtiger, taktiler Sensor mit zwei voneinander durch ein druckempfindliches Material beabstandeten Elektroden. Zumindest eine Elektrode ist dabei ein Faden eines leitfähigen Garns. Vorzugsweise sind beide Elektroden der Sensoreinheit aus leitfähigem Garn. Eine Elektrode aus leitfähigem Garn hat den Vorteil, dass diese sich in nahezu beliebige Richtung biegen lässt und ein Sensor folglich nicht auf eine gradlinige Ausführung beschränkt ist. Darüber hinaus kann eine Elektrode aus leitfähigem Garn besonders schmal mit nahezu beliebiger Länge ausgebildet sein, wodurch sich insgesamt ein besonders schmaler Sensor ermöglichen lässt, der optimal einer zu überwachenden Kante angepasst werden kann.

Dies wird weiter unterstützt, indem das druckempfindliche Material, welches die beiden Elektroden voneinander beabstandet, auf den jeweiligen Anwendungsfall angepasst wird. Ebenso ist es möglich, dass ein solcher mehrschichtiger Sensor nicht nur binär einen ersten und einen zweiten Zustand anzeigen kann, sondern in einem bevorzugten Ausführungsbeispiel auch analoge oder diskretisierte Einzelwerte liefern kann, die mit der Stärke oder dem Ort der Druckbelastung korrelieren.

Das erfindungsgemäße Gehäuse ermöglicht es, dass die Sensoreinheit besonders einfach zu einem produktiven Sensor zusammengesetzt werden kann. Insbesondere ermöglicht das erfindungsgemäße Gehäuse, dass die Sensoreinheit selbst ohne eine spezielle Umhäusung und damit besonders kostengünstig gefertigt werden kann. Die einstückige Ausgestaltung des Gehäuses wiederum ermöglicht es, den Sensor besonders gut gegen äußere Einflüsse abzuschirmen, während die Herstellungskosten auf ein Minimum reduziert werden können.

Insgesamt ermöglicht der Sensor eine besonders gute und effektive Uberwachung von Quetsch- und Scherkanten und ist auch ohne weiteren Aufwand für nicht gradlinige Kanten verwendbar. Der Sensor ist dabei besonders schmal- und leichtbauend und kann bevorzugt auch an mitfahrenden Komponenten einer automatischen Tür bzw. eines automatischen Fensters angeordnet sein. Die oben genannte Aufgabe ist somit vollständig gelöst.

In einer weiteren Ausgestaltung ist die Sensoreinheit im Gehäuse dicht verschlossen, wenn der Verbindungsabschnitt mit einem Träger gekoppelt ist. Sobald das Gehäuse somit auf den Träger aufgesetzt ist, ist die innenliegende Sensoreinheit vollständig abgeschirmt, sodass vorteilhaft eine hohe Schutzart (IP67) möglich ist.

In einer weiteren Ausgestaltung ist der Verbindungsabschnitt mit einem Träger mit einem definierten Profil koppelbar und weist Verbindungselemente auf, die so geformt sind, dass diese in das Profil des Trägers eingreifen, um eine schmutz- und wasserdichte Verbindung zwischen dem Verbindungsabschnitt und dem Profil herzustellen. In dieser Ausgestaltung ist ein Abschnitt des einstückigen Gehäuses so geformt, dass es mit dem Profil eines Trägers eine formschlüssige Verbindung eingehen kann. Dies ermöglicht eine besonders gute und sichere Abdichtung des neuen Sensors.

In einer besonders bevorzugten Weiterbildung sind die Verbindungselemente so ausgebildet, dass sie auseinandergespreizt werden können, um an dem Profil des Trägers montiert zu werden. Diese Ausgestaltung hat den Vorteil, dass das Gehäuse vorzugsweise werkzeuglos montiert werden kann.

Erfindungsgemäß umfasst der Grundkörper eine Aufnahme zur Lagerungder Sensoreinheit, die eine schlitzartige Öffnung zum Verbindungsabschnitt aufweist, über die die Sensoreinheit in das Gehäuse einlegbar ist. In dieser Ausgestaltung ist der Verbindungsabschnitt über eine schlitzartige Öffnung mit einer Aufnahme im Grundkörper verbunden, sodass die Aufnahme, wenn das Gehäuse nicht auf einem entsprechenden Profil montiert ist, von außen zugänglich ist. Auf diese Weise kann die Sensoreinheit besonders einfach ggf. auch von einem Endanwender werkzeuglos in das Gehäuse eingebracht werden. Dies ermöglicht eine besonders einfache und nutzerfreundliche Montage des taktilen Sensors. Vorzugsweise erstreckt sich die schlitzartige Öffnung über die gesamte Länge der Sensoreinheit, sodass diese besonders einfach eingelegt werden kann.

In einer weiteren Ausgestaltung weist das Gehäuse einen dicht verschließbaren Anschlussbereich auf, über den elektrische Kontakte zu der Sensoreinheit geführt werden können, wobei der Anschlussbereich ein Klemmteil zum Abdichten aufweist oder nachträglich durch Vergießen verschließbar ist. Diese Ausgestaltung trägt zu einer weiteren Vereinfachung der Montage bei, indem die elektrischen Kontakte, die notwendig sind, um die erste und die zweite Elektrode zu kontaktieren, auf einfache Weise aus dem Gehäuse herausgeführt werden können, wobei sich der Anschlussbereich durch ein Klemmteil leicht dicht verschließen lässt.

In einer weiteren Ausgestaltung erstreckt sich der Kompressionsbereich über den gesamten aktiven Bereich der Sensoreinheit und der Kompressionsbereich ist dazu ausgebildet, eine Kraft gleichmäßig auf die Sensoreinheit zu übertragen. In dieser Ausgestaltung ist somit ein separater Kompressionsbereich über die gesamte aktive Länge der Sensoreinheit ausgebildet, der eine mechanische Kraft, die aus einer Kollision mit einem Hindernis resultiert, gleichmäßig auf die Sensoreinheit überträgt, sodass eine besonders hohe Sensitivität erreicht werden kann.

In einer weiteren bevorzugten Ausgestaltung weist der Kompressionsbereich eine gekrümmte Oberfläche auf, die eine direkte Kraftübertragung ermöglicht, um eine hohe Sensitivität des Sensors zu erreichen. In dieser Ausgestaltung ist das Gehäuse somit an einer Oberseite abgerundet, wodurch eine Berührung dieser gleichmäßig auf den unter dem Kompressionsbereich befindlichen Grundkörper und der darin enthaltenen Sensoreinheit übertragen wird. Durch diese Ausgestaltung kann die Sensitivität des Sensors noch weiter erhöht werden.

In einer weiteren Ausgestaltung ist das Gehäuse aus geschäumtem Polyurethan mit einer verdichteten Oberfläche gefertigt. Diese Ausgestaltung trägt zu einer besonders kostengünstigen Herstellung des Sensors bei. Polyurethane sind Kunststoffe oder Kunstharze, die sich besonders leicht industriell herstellen lassen und sich als Hartschaum in beliebige Formen bringen lassen. Die verdichtete Oberfläche ermöglicht es, das Gehäuse besonders robust gegen äußere Einflüsse auszugestalten, ohne dass ein weiteres Material oder eine zusätzliche Komponente für das Gehäuse benötigt wird.

In einer weiteren Ausgestaltung ist das Gehäuse so dimensioniert, dass eine Länge des Gehäuses mindestens ein zweistelliges Vielfaches einer Breite, insbesondere einer Breite und einer Höhe des Gehäuses ist, wobei die Länge des Gehäuses durch die Erstreckung in die Längsrichtung definiert ist und der Verbindungsabschnitt, der Grundkörper und der Kompressionskörper übereinander angeordnet die Höhe des Gehäuses definieren. Diese Ausgestaltung beschreibt eine bevorzugte Gehäuseform für einen im Wesentlichen in einer Längsrichtung ausgebildeten Sensor. Das Gehäuse ist somit so ausgebildet, dass es sich einer schmalen, dünnen und in Längsrichtung ausgedehnten Form der Sensoreinheit anpasst. Die geringe Breite und die geringe Höhe des Sensors machen den Sensor besonders geeignet für die Anwendung als Einklemmschutz an Quetsch- und Scherkanten, da der Sensor nur wenig aufträgt. Insbesondere bei der Verwendung bei zwei aufeinander treffenden Glastüren wird der sichtbare Bereich durch den Sensor nur wenig beeinflusst.

In einer weiteren Ausgestaltung ist eine Breite des Sensors kleiner als 1 cm, und vorzugsweise kleiner als 0,7 cm und insbesondere 0,5 cm. Diese Maße sind besonders geeignet, um den Sensor auch bei schmalen Türen oder Fenstern einsetzen zu können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein erstes Ausführungsbeispiel eines Sensors in einer perspektivischen Darstellung,
- Fig. 2: ein zweites Ausführungsbeispiel eines Sensors in einer Querschnittsdarstellung,
- Fig. 3: ein drittes Ausführungsbeispiel eines Sensors in einer Querschnittsdarstellung,
- Fig. 4: ein viertes Ausführungsbeispiel eines Sensors in einer Querschnittsdarstellung sowie in einer Draufsicht,
- Fig. 5: ein fünftes Ausführungsbeispiel eines Sensors in einer Querschnittsdarstellung sowie in einer Draufsicht,
- Fig. 6: ein Ausführungsbeispiel für ein Gehäuse für einen Sensor in einer perspektivischen Darstellung,
- Fig. 7: das Ausführungsbeispiel gem. Fig. 6 in einer Querschnittsdarstellung, und
- Fig. 8: einen exemplarischen Anwendungsfall des neuen Sensors.

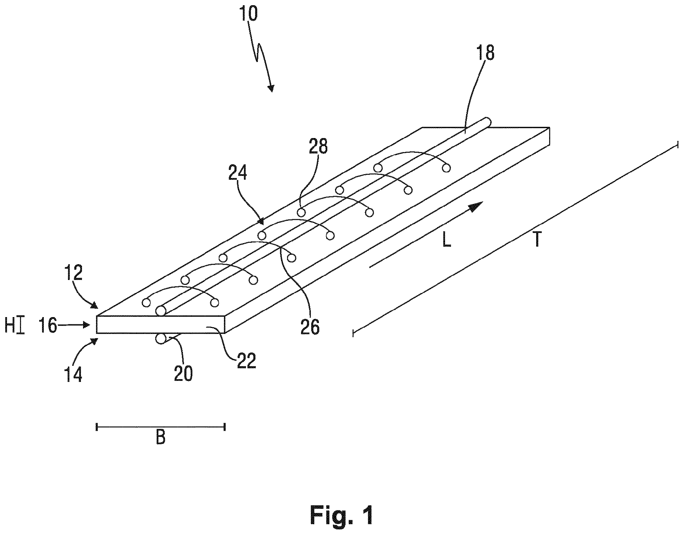

Fig. 1 zeigt ein erstes Ausführungsbeispiel des Sensors in einer perspektivischen Darstellung. Der Sensor ist hier in seiner Gesamtheit mit der Bezugsziffer 10 bezeichnet. Der Sensor 10 ist mehrschichtig und umfasst mindestens eine erste Schicht 12, eine zweite Schicht 14 sowie eine Zwischenschicht 16, welche zwischen der ersten und zweiten Schicht angeordnet ist. Die erste Schicht 12 umfasst eine erste Elektrode 18 und die zweite Schicht 14 umfasst eine zweite Elektrode 20.

Die erste und die zweite Elektrode 18, 20 sind in diesem Ausführungsbeispiel aus elektrisch leitfähigem Garn gebildet. Insbesondere sind die erste und die zweite Elektrode 18, 20 in diesem Ausführungsbeispiel je ein Faden eines elektrisch leitfähigen Garns und entsprechend flexibel ausgestaltet. Ein elektrisch leitfähiges Garn ist im Allgemeinen ein linienförmiges Textilgebilde, welches zu Geweben, Gestricken, Gewirken und Stickereien verarbeitet werden kann und insbesondere auch zum Nähen verwendet werden kann. Gegenüber einem normalen Garn ist ein leitfähiges Garn eingerichtet, elektrischen Strom zu führen. Dies kann dadurch erreicht werden, dass das Garn aus leitfähigen Fasern gesponnen wird, beispielsweise unter der Verwendung von Edelstahlfasern. Alternativ kann aber auch ein herkömmlicher nicht leitender Faden leitfähig gemacht werden, indem dieser mit leitfähigem Material beschichtet wird. Beispielsweise kann ein einfacher Nylonfaden mit Silber beschichtet werden, um einen leitfähigen Faden zu erhalten. Die verschiedenen leitfähigen Garnarten haben unterschiedliche Vor- und Nachteile hinsichtlich Festigkeit und Leitfähigkeit, sind aber in Bezug auf den Sensor gleichermaßen verwendbar. Entscheidend ist, dass der Faden durchweg leitfähig ist und gleichzeitig seine textilartigen Eigenschaften, insbesondere seine Flexibilität und Biegsamkeit beibehält.

Im Ausführungsbeispiel gemäß Fig. 1 sind als erste Elektrode und als zweite Elektrode 18, 20 jeweils nur ein einzelner elektrischer Faden gezeigt. Hierbei handelt es sich um einen Spezialfall. In anderen Ausführungsbeispielen können die erste und zweite Elektrode 18, 20 auch aus einer Vielzahl von elektrisch leitfähigen Fäden gebildet sein. Der in Fig. 1 aufgezeigte Spezialfall mit einer Elektrode aus nur einem einzelnen Faden aus leitfähigem Garn wird im Folgenden als "Ein-Garn-Elektrode" bezeichnet.

Ferner sind im Ausführungsbeispiel gemäß Fig. 1 die erste und die zweite Elektrode 18, 20 gleich ausgestaltet. Es versteht sich, dass dies nicht zwangsläufig der Fall sein muss und dass in anderen Ausführungsbeispielen eine Elektrode in der ersten Schicht anders ausgestaltet sein kann als eine Elektrode in der zweiten Schicht.

Eine Ausgestaltung der Elektroden 18, 20 als Garn bedingt, dass sich die Elektroden 18, 20 im Wesentlichen in einer Längsrichtung L erstrecken. Dies bedeutet jedoch nicht, dass die Elektroden gradlinig ausgebildet sein müssen. Vielmehr können die Elektroden auch in einem Bogen verlaufen, je nachdem welche Geometrie der entsprechende Anwendungsfall erfordert.

Die erste und die zweite Elektrode 18, 20 verlaufen in diesem Ausführungsbeispiel parallel zueinander und sind durch die Zwischenschicht 16 voneinander beabstandet. Die Zwischenschicht 16 ist aus druckempfindlichem Material 22 ausgebildet. Beispielsweise kann die Zwischenschicht komprimierbare Elemente aufweisen, die bei einem Druck quer zu den Elektroden 18, 20 auseinandergedrückt werden, sodass die erste und die zweite Elektrode 18, 20 an der Stelle der Druckbelastung in Berührung kommen. Alternativ kann für die Zwischenschicht auch ein Material verwendet werden, welches unter Druck eine elektrische Eigenschaft zwischen der ersten und der zweiten Elektrode 18, 20 verändert. Insbesondere kann ein Material verwendet werden, welches seinen elektrischen Widerstand unter Druck verändert. Eine Zwischenschicht 16 aus solch einem Material kann vorzugsweise, wie hier dargestellt, vollflächig ausgestaltet sein.

Unabhängig von der Ausgestaltung der Zwischenschicht 16 im Einzelnen kann bei einer Druckbelastung, die senkrecht auf die Zwischenschicht 16 wirkt, eine veränderte elektrisehe Eigenschaft zwischen der ersten und der zweiten Elektrode 18, 20 durch eine Auswerteschaltung (hier nicht dargestellt) festgestellt werden. Der in Fig. 1 dargestellte Spezialfall eines Sensors mit einer "Ein-Garn-Elektrode" beruht somit auf dem gleichen Wirkprinzip wie eine Schaltmatte mit in der Fläche ausgedehnten Elektroden.

Darüber hinaus weist der Sensor ein Befestigungsmittel 24 auf, welches zumindest die erste Elektrode an der Zwischenschicht 16 in einer definierten Position fixiert. Das Befestigungsmittel 24 weist mindestens eine erste Naht 26 auf, die sich in der von der ersten Elektrode definierten Längsrichtung L erstreckt. Das heißt, die Naht 26 weist Ein- und Austrittsöffnungen 28 auf, die parallel entlang der ersten Elektrode 18 verlaufen. Durch die Ein- und Austrittsöffnungen 28 ist ein Faden vielfach wiederholt durch das druckempfindliche Material 22 geführt, um die erste Elektrode 18 an der Zwischenschicht 16 zu halten. In dem hier dargestellten Ausführungsbeispiel ist hierzu der Faden wiederholt über die erste Elektrode geführt, wodurch diese an die Zwischenschicht 16 gepresst wird.

Es versteht sich, dass in bevorzugten Ausführungsbeispielen, wenn die zweite Elektrode 20 in ähnlicher Weise ausgebildet ist wie die erste Elektrode, diese ebenfalls über eine Naht an der Zwischenschicht 16 befestigt sein kann. Besonders bevorzugt ist dabei auch die zweite Elektrode 20 über die erste Naht 26 fixiert, sodass für die erste und für die zweite Elektrode 18, 20 nur ein Befestigungsmittel 24 benötigt wird. Der Faden der ersten Naht 26 weist dabei ähnliche Eigenschaften - abgesehen von der Leitfähigkeit - auf wie das elektrisch leitfähige Garn der ersten oder zweiten Elektrode 18, 20, sodass der Sensor insgesamt die Flexibilität der Elektrode beibehält. Insgesamt ist somit durch das Befestigungsmittel 24 die Flexibilität des Sensors nicht wesentlich eingeschränkt. Gleichzeitig ist jedoch die erste Elektrode 18 durch das Befestigungsmittel 24 so fixiert, dass auch beim Verdrehen oder Biegen des Sensors 10 die erste Elektrode 18 in ihrer vorgegebenen Position gehalten wird.

Bevorzugt findet der erfindungsgemäße Sensor Anwendung als streifenförmiger Sensor zur Absicherung von Quetsch- und Scherkanten, wie beispielsweise an industriellen Produktionsanlagen, automatischen Türen, Toren oder Fenstern in der Gebäudetechnik oder Fahrzeugtüren im öffentlichen Personenverkehr. Ein bevorzugter Sensor erstreckt sich somit im Wesentlichen in einer Längsrichtung L und eine Höhe H und eine Breite B des Sensors sind im Verhältnis zu seiner Tiefe T gering. Insbesondere ist die Tiefe T in bevorzugten Ausführungsbeispielen mindestens ein Zehnfaches der Breite B. Ferner lässt sich der Sensor in einem weiteren bevorzugten Ausführungsbeispiel aufrollen und applizieren wie ein Klebeband. Ebenso ermöglicht die erfindungsgemäße Ausgestaltung, dass der Sensor als laufendes Stückgut gefertigt ist, das erst beim Endanwender in seine abschließende Form geschnitten wird. Die durch die individuelle Fixierung der Elektroden erreichte Robustheit geht dabei nicht verloren, da diese nur von der Ausgestaltung der Elektrode abhängig ist und nicht von der Geometrie des Sensors.

Es versteht sich, dass die vorliegende Erfindung nicht auf die vorstehend genannten streifenartigen Sensoren beschränkt ist, sondern eine individuelle Fixierung auch bei anders ausgestalteten taktilen Sensoren mit anderen Geometrien Anwendung finden kann.

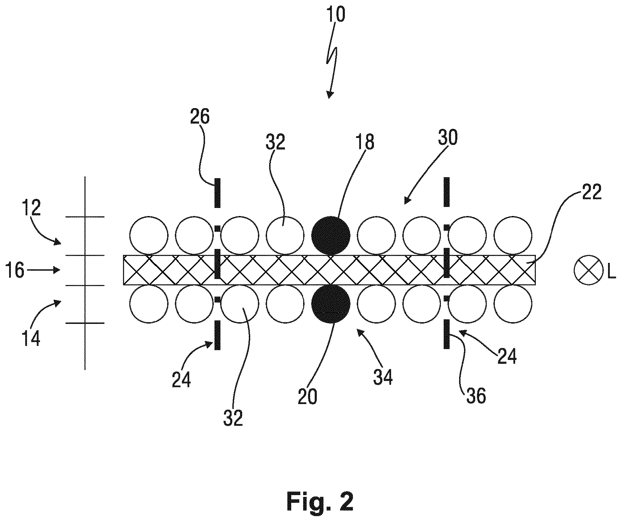

Mit Bezug zu der Fig. 2 wird im Folgenden ein zweites Ausführungsbeispiel eines erfindungsgemäßen Sensors näher erläutert. Fig. 2 zeigt den Sensor in einer Querschnittsdarstellung. Gleiche Bezugszeichen bezeichnen dabei gleiche Teile wie im Ausführungsbeispiel gemäß Fig. 1.

Im Gegensatz zum Ausführungsbeispiel gemäß Fig. 1 sind die erste und die zweite Schicht nicht ausschließlich aus einer Elektrode aus leitfähigem Garn gebildet. Vielmehr sind die leitfähigen Elektroden 18, 20 je Teil eines textilen Flächengebildes. Ein erstes textiles Flächengebilde 30 bildet die erste Schicht 12 und umfasst neben der ersten Elektrode 18 aus elektrisch leitfähigem Garn weitere nicht-leitfähige Fäden 32. Die nicht leitfähigen Fäden 32 und die erste Elektrode 18 erstrecken sich in einer Längsrichtung L in die Bildebene hinein und sind mit zur Längsrichtung quer verlaufenden Fäden verwoben, um ein textiles Werkstück zu bilden. Bei dem ersten Flächengebilde handelt es sich somit um einen textilen Stoff, der aus leitfähigen und nicht leitfähigen Fäden gebildet ist.

Die zweite Elektrode 20 ist in diesem Ausführungsbeispiel wie die erste Elektrode 18 ebenfalls mit nicht-leitfähigen Fäden zu einem zweiten Flächengebilde 34 verwoben. Das erste und das zweite Flächengebilde 30, 34 sind auf gegenüberliegenden Seiten auf die Zwischenschicht 16 aufgelegt. Die Bereiche, in denen sich die erste und die zweite Elektrode 18, 20 überlappen, bilden dabei die aktiven Bereiche, in denen eine Kompression des druckempfindlichen Materials 22 der Zwischenschicht 16 durch die erste und die zweite Elektrode 18, 20 registriert werden kann. Im hier gezeigten Ausführungsbeispiel sind die erste Elektrode 18 und die zweite Elektrode 20 über ihre gesamte Länge parallel zueinander angeordnet, sodass der aktive Bereich durch die Dimensionierung der ersten und zweiten Elektrode 18, 20 definiert ist. Es versteht sich, dass eine andere Anordnung der Elektroden denkbar ist. Insbesondere können in anderen Ausführungsbeispielen auch weitere Elektroden vorgesehen sein, die matrixartig angeordnet sind, um druckempfindliche Zellen zu definieren, die individuell abgefragt werden können.

Im Ausführungsbeispiel gemäß Fig. 2 ist neben einer ersten Naht 26 eine zweite Naht 36 vorgesehen, die zusammen das Befestigungsmittel 24 bilden. Der Faden der ersten Naht 26 und der Faden der zweiten Naht 36 sind in diesem Ausführungsbeispiel wiederholt vielfach sowohl durch die erste Schicht 12, die zweite Schicht 14 und die Zwischenschicht 16 geführt. Die Nähte 26, 36 verlaufen dabei entlang der Längsrichtung L parallel zu der ersten und der zweiten Elektrode 18, 20. Weder die erste Naht 26 noch die zweite Naht 36 sind in diesem Ausführungsbeispiel unmittelbar mit der ersten bzw. mit der zweiten Elektrode 18, 20 verbunden, um diese zu fixieren. Vielmehr sind die erste Naht 26 und die zweite Naht 36 mit dem ersten Flächengebilde 30 und dem zweiten Flächengebilde 34 verbunden, um diese an der Zwischenschicht 16 zu fixieren. Da sowohl die erste Elektrode 18 als auch die zweite Elektrode 20 jeweils in das erste bzw. das zweite textile Flächengebilde 30, 34 eingewoben sind, fixieren die erste Naht 26 und die zweite Naht 36 des Befestigungsmittels 24 darüber hinaus auch die Elektroden in einer definierten Position zueinander. Die Elektroden sind in diesem Ausführungsbeispiel somit nur indirekt über die Nähte 26, 36 fixiert.

Die Biegsamkeit des Sensors 10 ist in erster Linie abhängig von der Biegsamkeit der einzelnen Schichten 12, 14, 16 und wird durch die erste und zweite Naht 26, 36 im Wesentlichen nicht beeinflusst. Gleichwohl bleiben die Elektroden 18, 20 auch beim Verbiegen oder Verdrehen des Sensors in ihrer definierten Position. Da die Nähte hier in diesem Ausführungsbeispiel nicht mit den Elektroden in unmittelbaren Kontakt stehen, können die Nähte hier ebenfalls aus leitfähigem Garn sein und ggf. zu Kontaktierung der Elektroden oder anderer Komponenten des Sensors beitragen.

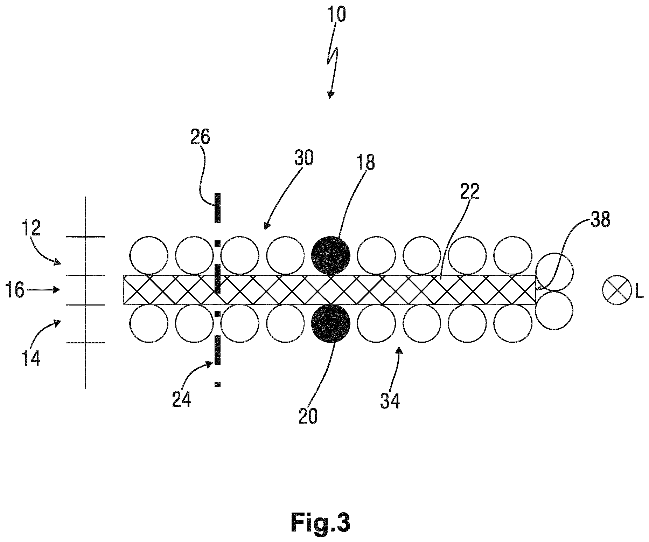

Mit Bezug auf die Fig. 3 wird im Folgenden eine weitere Abwandlung des in Fig. 2 beschriebenen Ausführungsbeispiels näher erläutert. Fig. 3 zeigt dabei den Sensors ebenfalls in einer Querschnittsdarstellung, wobei auch hier gleiche Bezugszeichen gleiche Teile bezeichnen.

Im Ausführungsbeispiel gemäß der Fig. 3 sind die erste Elektrode 18 und die zweite Elektrode 20 ebenfalls Teile eines textilen Flächengebildes. Im Gegensatz zu dem zuvor beschriebenen Beispiel sind das erste Flächengebilde 30 und das zweite Flächengebilde 34 jedoch Abschnitte eines gemeinsamen Flächengebildes, welches um eine Seitenkante 38 des druckempfindlichen Materials 22 der Zwischenschicht 16 gefaltet ist. Die erste und die zweite Schicht 12, 14 werden in diesem Ausführungsbeispiel somit dadurch gebildet, dass ein einstückiges, textiles Werkstück übereinander gefaltet wird. Wie in einem Briefumschlag ist die Zwischenschicht 16 aus dem druckempfindlichen Material 22 dabei in das gefaltete Flächengebilde eingelegt. Das Flächengebilde wird vorzugsweise so um die Seitenkante 38 gefaltet, dass die erste Elektrode 18 und die zweite Elektrode 20 übereinander zum Liegen kommen. Der Bereich, in dem die erste Elektrode 18 und die zweite Elektrode 20 überlappen, ist wiederum der aktive Bereich des Sensors 10. Im hier dargestellten Ausführungsbeispiel überlappen sich die erste Elektrode 18 und die zweite Elektrode 20 über ihre gesamte Länge in Längsrichtung L.

Ferner ist im Gegensatz zum vorstehend genannten Ausführungsbeispiel gemäß Fig. 3 als Befestigungsmittel 24 eine einzelne Naht 26 vorgesehen. Die einzelne Naht 26 verläuft in diesem Ausführungsbeispiel parallel zu der ersten und zweiten Elektrode 18, 20 und der Seitenkante 38. Bildlich gesprochen verschließt die Naht 26 somit den Umschlag, in dem das druckempfindliche Material 22 der Schicht 16 wie ein Brief eingelegt ist. Die Naht 26 fixiert dabei sowohl die erste Schicht 12, die zweite Schicht 14 als auch die Zwischenschicht 16 miteinander, indem die Naht 26 sowohl durch das erste Flächengebilde 30, das zweite Flächengebilde 34 und die Zwischenschicht 16 geführt ist.

Ein bandförmiger Sensor gemäß dem Ausführungsbeispiel der Fig. 3 lässt sich in dieser Weise besonders einfach und kostengünstig realisieren, da nur eine Naht gesetzt werden muss und neben der Naht nur ein einstückiges Werkstück mit eingewobenen Elektroden und eine Zwischenschicht benötigt wird.

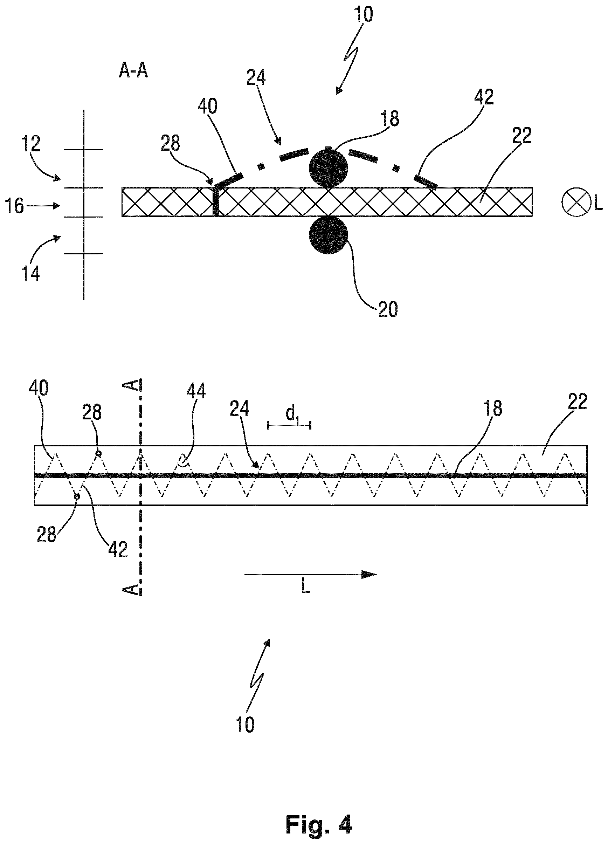

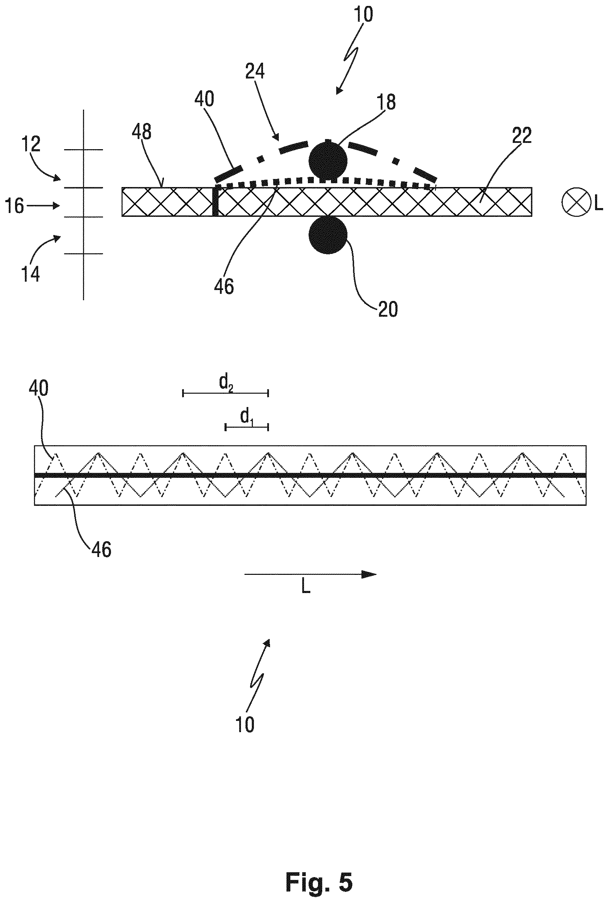

Fig. 4 und Fig. 5 zeigen zwei weitere Ausführungsbeispiele des Sensors. Fig. 4 zeigt den Sensors dabei sowohl in einer Draufsicht im unteren Abschnitt und in einer Querschnittsdarstellung in der oberen Hälfte der Darstellung. Gleiche Bezugszeichen bezeichnen auch hier wieder gleiche Teile. Der Sensor 10 umfasst hier wie im Ausführungsbeispiel gemäß Fig. 1 jeweils eine einzelne Elektrode in einer ersten Schicht 12 und in einer zweiten Schicht 14. Es handelt sich folglich um den Spezialfall einer "Ein-Garn-Elektrode" sowohl in der ersten Schicht 12 als auch in der zweiten Schicht 14. Es versteht sich jedoch, dass die Fixierung der Elektroden, wie im Folgenden näher erläutert, nicht auf diese Ausgestaltung beschränkt ist, sondern auch bei anders ausgestalteten Elektroden Anwendung finden kann. Insbesondere kann eine Elektrode auch aus mehreren Fäden zusammengesetzt sein, die nebeneinander liegen, verdrillt oder verwoben sind.

Wie in den vorherigen Ausführungsbeispielen sind die erste Elektrode 18 und die zweite Elektrode 20 durch eine Zwischenschicht 16 aus druckempfindlichem Material 22 voneinander beabstandet. Die erste und die zweite Elektrode 18, 20 erstrecken sich entlang einer Längsrichtung L und bestimmen dabei im Wesentlichen die Dimension des Sensors 10. Bei dem Sensor 10 handelt es sich somit ebenfalls um einen bandförmigen Sensor, der relativ lang, schmal und dünn ist und dadurch beispielsweise auf schmalen Kanten von Türen oder Fenstern angebracht werden kann. Der aktive Bereich des Sensors entspricht dem Bereich, in dem sich die erste Elektrode 18 und die zweite Elektrode 20 überlappen. Eine Kompression des druckempfindlichen Materials 22 in der näheren Umgebung zu der ersten Elektrode und der zweiten Elektrode 18, 20 kann von dem Sensor 10 erfasst werden, indem eine Änderung einer elektrischen Eigenschaft zwischen der ersten Elektrode 18 und der zweiten Elektrode 20 bedingt durch die Kompression registriert wird.

Die erste Elektrode 18 wird mittels eines Befestigungsmittels 24 an der Zwischenschicht 16 gehalten. Das Befestigungsmittel 24 umfasst hier eine Zickzacknaht 40 mit einem Faden, der ein erstes Zickzackmuster definiert. Der Faden ist durch das druckempfindliche Material 22 geführt, tritt aus einer Ein- und Austrittsöffnung 28 aus dem druckempfindlichen Material 22 heraus und wird über die erste Elektrode 18 zu einer weiteren Ein- und Austrittsöffnung 28 geführt, durch welche es wieder in das druckempfindliche Material 22 eintritt. Die kurzen Strecken 42, die der Faden zwischen den einzelnen Ein- und Austrittsöffnungen 28 definiert, sind in gleichen Winkeln 44 aneinandergereiht, sodass deren Enden, also die Ein- und Austrittsöffnungen 28, zwei parallele Linien oder Bögen beschreiben, zwischen denen die erste Elektrode 18 angeordnet ist. Vorzugsweise sind die Ein- und Austrittsöffnungen 28 auf der jeweiligen Seite der ersten Elektrode 18 im gleichen Abstand zu dieser angeordnet, sodass die Elektrode gleichmäßig durch die kurzen Strecken 42 an die Zwischenschicht 16 gepresst wird. Mit anderen Worten kreuzt die Zickzacknaht 40 in Längsrichtung L in einem definierten Intervall d₁ die erste Elektrode 18. Eine Zickzacknaht 40 lässt sich besonders einfach maschinell herstellen. Gleichzeitig wird die erste Elektrode 18 durch die Zickzacknaht 40 optimal in einer vorgegebenen Position fixiert.

Es versteht sich, dass neben einem Zickzackmuster auch ein anderes Nahtmuster verwendet werden kann, bei dem die erste Elektrode 18 an die Zwischenschicht 16 gedrückt und in einer definierten Position fixiert wird. Das Zickzackmuster ist bevorzugt, da es sich besonders leicht erstellen lässt. Darüber hinaus kann in einem anderen Ausführungsbeispiel auch die zweite Elektrode 20 auf gleiche Weise mit einer entsprechenden Naht an der Zwischenschicht 16 fixiert werden.

Fig. 5 zeigt eine Abwandlung des Ausführungsbeispiels des Sensors gemäß Fig. 4. Auch hier bezeichnen gleiche Bezugszeichen wieder gleiche Teile. Fig. 5 zeigt den Sensor 10 sowohl in einer Draufsicht (unten) als auch in einer Schnittdarstellung (oben).

Wie im vorherigen Ausführungsbeispiel sind die erste und die zweite Schicht 12, 14 jeweils aus einer Elektrode 18, 20 gebildet und durch eine Zwischenschicht 16 aus druckempfindlichem Material 22 voneinander beabstandet. Die erste Elektrode 18 ist auch hier durch eine erste Zickzacknaht 40 an der Zwischenschicht 16 gehalten.

Zusätzlich zum vorherigen Ausführungsbeispiel umfasst das Befestigungsmittel 24 neben der ersten Zickzacknaht 40 noch eine zweite Zickzacknaht 46. Wie die erste Zickzacknaht 40 erstreckt sich auch die zweite Zickzacknaht 46 in der durch die erste Elektrode 18 definierten Längsrichtung L. Im Unterschied zur ersten Zickzacknaht 40 ist die zweite Zickzacknaht 46 jedoch unterhalb der ersten Elektrode 18 zwischen dieser und der Zwischenschicht 16 angeordnet. Mit anderen Worten ist die zweite Zickzacknaht 46 eine Naht, die unmittelbar auf der Oberfläche der Zwischenschicht 16 aufliegt. Dabei kreuzt die zweite Zickzacknaht 46 die erste Elektrode 18 in einem definierten Intervall d₂. An den Kreuzungspunkten liegt die erste Elektrode 18 somit nicht unmittelbar auf der ersten Zwischenschicht 16 auf, sondern wird hier durch die zweite Zickzacknaht 46 gestützt.

Die zweite Zickzacknaht 46 fungiert in diesem Ausführungsbeispiel folglich als Abstandshalter, über den die Sensitivität des Sensors 10 einstellbar ist. Indem die Anzahl an Stützstellen erhöht wird, kann der Sensor 10 so angepasst werden, dass ein größerer Druck auf die Elektrode 18 und die Zwischenschicht 16 ausgeübt werden muss, um eine Veränderung der elektrischen Eigenschaften zwischen der ersten Elektrode 18 und der zweiten Elektrode 20 zu bewirken. Insbesondere kann durch die zweite Zickzacknaht 46 eine hohe Anpresskraft, die durch die erste Zickzacknaht 40 auf die erste Elektrode 18 ausgeübt wird, kompensiert und ausgeglichen werden.

Insgesamt kann eine Sensitivität des Sensors durch Variieren der Abstände der Stützstellen und/oder der Abstände der Überlappung der ersten bzw. der zweiten Zickzacknaht 40, 46 vorteilhaft eingestellt werden. Das Befestigungsmittel 24 dient in diesem Ausführungsbeispiel somit nicht nur als individuelle Fixierung einer einzelnen Elektrode, sondern auch als Einstellmittel zur Kontrolle der Sensitivität des Sensors. Es ist dabei denkbar, dass in anderen Ausführungsbeispielen ein Intervall der Stützstellen (d₂) bzw. ein Intervall der Überlappungen (d₁) über die Längsrichtung L hin variieren, um an unterschiedlichen Stellen des Sensors eine unterschiedliche Sensitivität bereitzustellen. So können alleine über das Befestigungsmittel 24 unterschiedliche Bereiche des Sensors mit unterschiedlicher Sensitivität bereitgestellt werden. Es versteht sich, dass auch in diesem Ausführungsbeispiel eine andere Naht als eine Zickzacknaht zur Befestigung oder als Abstandshalter verwendet werden kann.

Während in den vorliegenden Ausführungsbeispielen das Befestigungsmittel 24 jeweils für die erste Elektrode 18 beschrieben worden ist, ist es ebenso denkbar, dasselbe Befestigungsmittel 24 auch für die zweite Elektrode 20 zu verwenden. Ebenso ist es denkbar, dass die verschiedenen Befestigungsmittel, wie sie in den einzelnen Ausführungsbeispielen gezeigt worden sind, auch miteinander kombiniert werden können. Bspw. kann eine Zickzacknaht auch dann verwendet werden, wenn die erste und/oder die zweite Schicht ein textiles Flächengebilde sind. Darüber hinaus ist es denkbar, dass für die erste Schicht 12 ein erstes Befestigungsmittel 24 verwendet wird und für die zweite Schicht 14 ein anderes Befestigungsmittel. Insoweit lassen sich die einzelnen Befestigungsmittel für jede Schicht beliebig variieren. Ebenso versteht es sich, dass die gezeigten Ausführungsbeispiele im Besonderen für den Spezialfall von einer "Ein-Garn-Elektrode" geeignet sind, jedoch auch für Elektroden, die aus mehreren Fäden eines leitfähigen Garns ausgebildet sind, verwendet werden können.

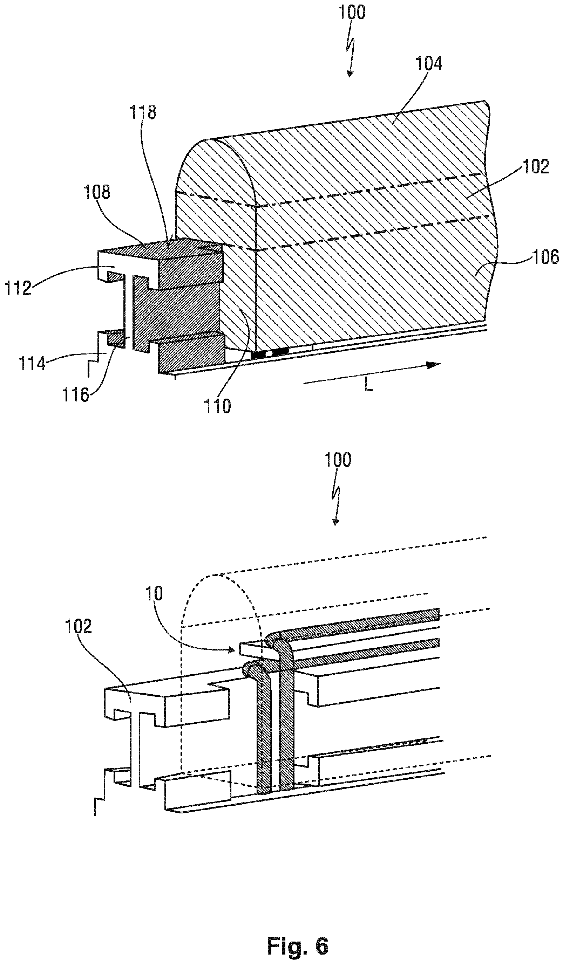

Mit Bezug auf Fig. 6 wird im Folgenden ein bevorzugtes Ausführungsbeispiel für ein Gehäuse für einen vorstehend offenbarten Sensor erläutert. Das Gehäuse ist insbesondere für die Befestigung und zum Schutz eines streifenförmigen Sensors ausgebildet. Fig. 6 zeigt in zwei Abbildungen den Sensor in einer perspektivischen Darstellung. Die obere Abbildung zeigt das Gehäuse in einer geschlossenen Form, während die untere Abbildung einen Blck ins Innere des Gehäuses ermöglicht, wobei die äußeren Konturen hier durch gestrichelte Linien dargestellt sind. In beiden Abbildungen bezeichnen gleiche Bezugszeichen gleiche Teile.

Das Gehäuse, das hier in seiner Gesamtheit mit der Bezugsziffer 100 bezeichnet ist, unterteilt sich in einen Grundkörper 102, einen Kompressionskörper 104 und einen Verbindungsabschnitt 106. Da das Gehäuse einstückig aus elastischem Material gefertigt ist, gehen der Kompressionskörper 104, der Grundkörper 102 und der Verbindungsabschnitt 106 nahtlos ineinander über. Innerhalb des Sensors 100, genauer gesagt im Grundkörper 102, ist eine streifenartige Sensoreinheit 10 angeordnet. Bei der streifenartigen Sensoreinheit 10 handelt es sich vorzugsweise um ein Ausführungsbeispiel eines Sensors, wie es zuvor mit Bezug zu den Fig. 1 bis 5 beschrieben worden ist. Insbesondere handelt es sich somit um einen Sensor, der wenigstens eine Elektrode aus leitfähigem Garn aufweist. Stellvertretend für solch einen Sensor ist hier der Spezialfall mit einer "Ein-Garn-Elektrode" angedeutet. Wie der zu beherbergende Sensor erstreckt sich das Gehäuse 100 im Wesentlichen entlang einer Längsrichtung L.

Das Gehäuse 100 ist zusammen mit der Sensoreinheit 10 auf einem Träger 108 montiert, der nicht Teil des Gehäuses ist, aber mit diesem zusammenwirkt, um den Sensor 10 entsprechend zu lagern und gegen äußere Einflüsse abzuschirmen. Vorzugsweise ist das Gehäuse 100 dazu ausgebildet, eine formschlüssige Verbindung zum Träger 108 herzustellen. Hierzu weist das Gehäuse Verbindungselemente 110 im Verbindungsabschnitt 106 auf, die so geformt sind, dass sie zu einer formschlüssigen Verbindung in den Träger 108 eingreifen. Bei dem Träger 108 handelt es sich somit bevorzugt um ein längliches Profil, an dessen äußere Form die Verbindungselemente 110 angepasst sind.

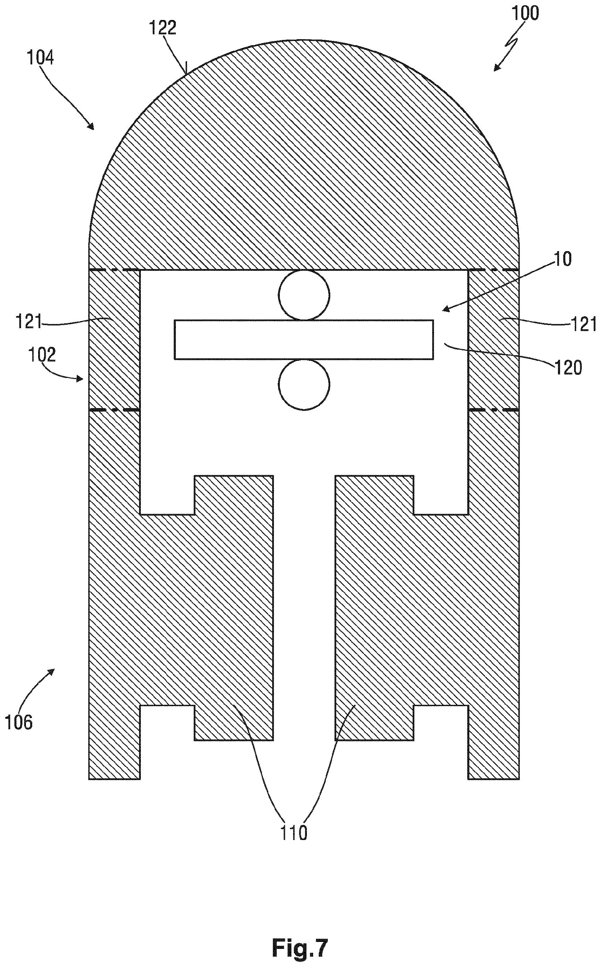

Im hier dargestellten Ausführungsbeispiel handelt es sich bei dem Träger 108 um ein Doppel-T-Profil mit einem oberen Flansch 112 und einem unteren Flansch 114 sowie einem die beiden Flansche verbindenden Mittelsteg 116. Der obere Flansch 112 hat eine ebene Oberfläche 118, die als Auflagefläche für die Sensoreinheit 10 dient. Die Oberfläche 118 bildet somit eine stabile und gleichmäßige Basis für die Sensoreinheit 10. Im Übrigen umschließt das Gehäuse 100 die Auflagefläche 118 samt Sensoreinheit 10. Die Sensoreinheit 10 ist somit dicht im Gehäuse 100 verschlossen. Über den Kompressionskörper 104 werden Stöße gleichmäßig auf die Sensoreinheit 10 übertragen. Die spezielle Form des Grundkörpers 102, des Kompressionskörpers 104 und des Verbindungsabschnitts 106 und deren Funktionen werden im Folgenden mit Bezug auf die Fig. 7 näher erläutert.

Fig. 7 zeigt das Ausführungsbeispiel des Gehäuses gemäß der Fig. 6 in einem Querschnitt. Gleiche Bezugszeichen bezeichnen hier wieder gleiche Teile. Durch die gestrichelten Linien ist hier die Unterteilung des Gehäuses 100 in den Kompressionskörper 104, den Grundkörper 102 sowie den Verbindungsabschnitt 106 angedeutet. Der Verbindungsabschnitt 106 weist, wie zuvor beschrieben, in diesem Ausführungsbeispiel zwei Verbindungselemente 110 auf, über die eine formschlüssige Verbindung zu einem Träger (hier nicht dargestellt) ermöglicht werden kann. Die Verbindungselemente 110 sind so eingerichtet, dass sie auseinandergespreizt werden können, um auf einem Träger montiert zu werden.

Der Grundkörper 102 weist eine Aufnahme 120 auf, in der die Sensoreinheit 10 einlegbar ist. Die Aufnahme 120 ist nach oben hin durch den Kompressionskörper 104 verschlossen sowie an der Seite durch Seitenteile 121, die der Höhe der Sensoreinheit 10 entsprechen. Im unteren Abschnitt, also im Übergang zum Verbindungsabschnitt 106, ist die Aufnahme 120 vorzugweise offen, sodass die Sensoreinheit 10 durch den Verbindungsabschnitt 106 in den Grundkörper 102 eingelegt werden kann. Wie bei der Montage auf einen Träger werden hierzu die Verbindungselemente 110 auseinandergespreizt und die Sensoreinheit 10 in die Aufnahme 120 eingelegt. Auf diese Weise ist eine werkzeuglose Montage der Sensoreinheit 10 möglich.

Im montierten Zustand, also wenn das Gehäuse 100 auf einen Träger aufgesetzt ist, dichten die Verbindungselemente 110 die Aufnahme 120 gegen Wasser und Verschmutzung ab, sodass der Sensor vor äußeren Einflüssen geschützt ist. Vorzugsweise lässt sich so ein Sensor mit einer Schutzart IP67 erzeugen. In Bereichen, in denen die elektrischen Kontakte zur Sensoreinheit 10 geführt werden, was vorzugsweise an einer Kopfseite des Sensors erfolgt, kann die Dichtheit mit einem passenden Klemmteil (hier nicht dargestellt) oder durch nachträgliches Vergießen gewährleistet werden.

Der Kompressionsbereich 104 ist dazu ausgebildet, Kräfte, die auf die Oberfläche 122 des Kompressionskörpers 104 wirken, auf die streifenförmige Sensoreinheit 10 zu übertragen. Gleichzeitig ist der Kompressionskörper 104 dazu ausgebildet, Stöße auf den Sensor 10 entsprechend zu dämpfen, sodass die Sensoreinheit 10 ohne weitere Umhäusung in die Aufnahme 120 eingelegt werden kann. Der Kompressionskörper ist im Verhältnis zum übrigen Gehäuse verhältnismäßig dick und weich ausgestaltet und weist vorzugsweise eine gekrümmte Oberfläche 122 auf. Die gekrümmte Oberfläche 122 hat den Vorteil, dass eine darauf einwirkende Kraft gleichmäßig auf den Sensor 10 übertragen wird. Die Sensitivität des Sensors 10 wird dadurch vorteilhaft erhöht.

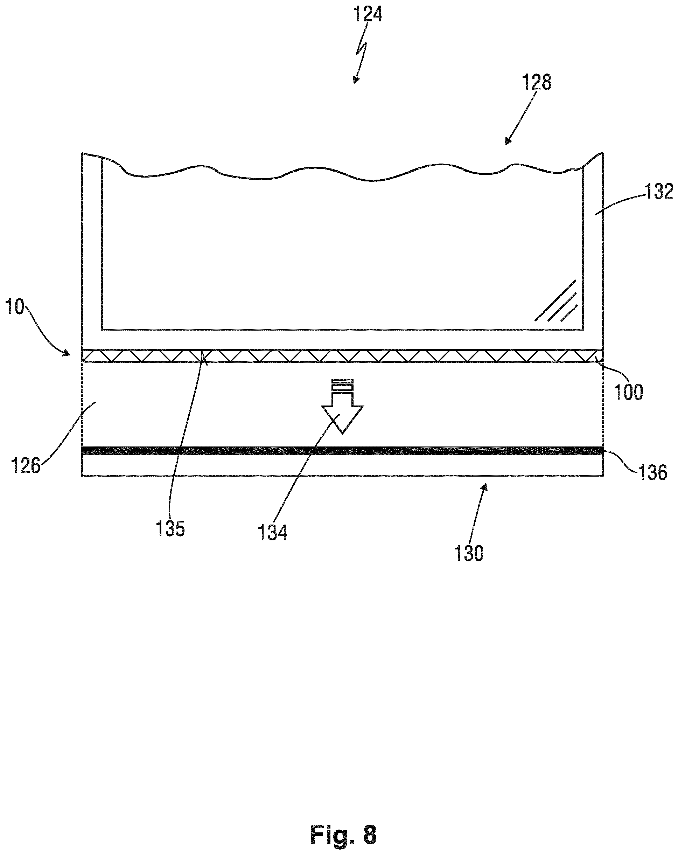

Das Material, aus dem das Gehäuse 100 einstückig gefertigt ist, ist geschäumtes Polyurethan mit einer verdichteten Oberfläche. Die Maße des Gehäuses 100 bestimmen sich im Wesentlichen durch die verwendete Sensoreinheit 10. Vorzugs-weise ist eine Länge des Gehäuses, also hier die Ausdehnung in die Bildebene hinein, mindestens ein zweistelliges Vielfaches seiner Breite bzw. seiner Höhe. Die Höhe des Gehäuses bestimmt sich maßgeblich durch den Kompressionskörper 104 und den Verbindungsabschnitt 106, während der Grundkörper 102 so schmal wie die Sensoreinheit 10 ausgebildet sein kann und somit im Verhältnis nicht wesentlich zur Höhe beiträgt. Besonders bevorzugt ist eine Breite B des Sensors kleiner als 1 cm und vorzugsweise kleiner 0,7 cm und insbesondere 0,5 cm. Damit eignet sich der Sensor besonders gut, um als Einklemmschutz für automatische Türen, Tore und Fenster verwendet zu werden oder zum Bestimmen, ob solche dicht verschlossen sind. Ein konkretes Anwendungsbeispiel wird im Folgenden mit Bezug auf die Fig. 8 erläutert.

Fig. 8 zeigt ein automatisch schließendes Fenster 124, an welchem ein erfindungsgemäßer Sensor 10 angeordnet ist. Das Fenster 124 ist dazu ausgebildet, eine Öffnung 126 zu verschließen und hat einen ersten Teil 128 und einen zweiten Teil 130. Der erste Teil 128 ist hier eine Fensterscheibe, die sich in einem Rahmen 132 befindet, der entlang der durch den Pfeil 134 dargestellten Bewegungsrichtung beweglich ist. Der zweite Teil 130 bildet den Anschlag, an dem eine Seitenkante 135 des Rahmens 132 bündig anliegt, wenn das Fenster 124 die Öffnung 126 verschließt.

An der besagten Seitenkante 135 am Rahmen 132 ist hier über die gesamte Länge ein Ausführungsbeispiel des neuen Sensors angeordnet. Der Sensor 10 ist hier dazu ausgebildet, zu detektieren, ob die Öffnung 126 vollständig verschlossen ist. Der zweite Teil 130, der hier als Anschlag ausgebildet ist und feststehend ist, kann in anderen Ausführungsbeispielen ebenfalls beweglich ausgebildet sein. Vorzugsweise weist der zweite Teil 130 eine Dichtlippe 136 auf, die im Querschnitt ähnlich ausgebildet ist, wie das Gehäuse 100 des neuen Sensors 10. Auf diese Weise fungieren die Dichtlippe 136 und das Gehäuse 100 zusätzlich als Dichtung.

Der Sensor ermöglicht auf einfache Weise basierend auf einem taktilen Prinzip die Dichtheit einer Tür, eines Tors oder eines Fensters zu überprüfen. Insbesondere wenn die Sensoreinheit 10 dazu eingerichtet ist, neben einer Belastung selbst auch deren Stärke bzw. deren Verteilung über den Sensor zu bestimmen, kann der Sensor vorteilhaft gleichzeitig für verschiedene Anwendungsfälle, wie bspw. Dichtheitsprüfung und Einklemmschutz eingesetzt werden.

## Patentansprüche

1. Taktiler Sensor mit einer Sensoreinheit (10), welche eine erste Schicht (12) mit einer ersten Elektrode (18), eine zweite Schicht (14) mit einer zweiten Elektrode (20) und eine Zwischenschicht (16) aus druckempfindlichem Material (22), welche die erste Elektrode (18) von der zweiten Elektrode (20) beabstandet, aufweist, sowie mit einem Gehäuse (100), in dem die Sensoreinheit (10) angeordnet ist,
wobei zumindest die erste Elektrode (18) aus leitfähigem Garn gebildet ist und sich die Sensoreinheit (10) entlang einer durch das leitfähige Garn definierten Längsrichtung L erstreckt,
wobei die erste und zweite Elektrode (18, 20) zusammen mit dem druckempfindlichen Material (22) einen aktiven Bereich der Sensoreinheit (10) definieren, der so ausgebildet ist, dass eine Kompression des druckempfindlichen Materials (22) in dem aktiven Bereich zu einer Veränderung einer elektrischen Eigenschaft zwischen der ersten und der zweiten Elektrode (18, 20) führt, die von einer Auswerteeinheit erfassbar ist,
wobei das Gehäuse (100) einen Grundkörper (102), einen Kompressionskörper (104) und einen Verbindungsabschnitt (106) aufweist, wobei der Grundkörper (102) dazu eingerichtet ist, die Sensoreinheit (10) aufzunehmen, der Kompressionskörper (104) dazu eingerichtet ist, eine auf diesen einwirkende mechanische Kraft auf die Sensoreinheit (10) zu übertragen, und der Verbindungsabschnitt (106) dazu eingerichtet ist, das Gehäuse mit einem Träger (108) zu koppeln,
wobei sich das Gehäuse (100) mit Grundkörper (102), Kompressionskörper (104) und Verbindungsabschnitt (106) entlang der Längsrichtung L erstreckt und das Gehäuse (100) einstückig aus einem elastischen Material gebildet ist,
wobei ferner der Grundkörper (102) eine Aufnahme (120) zur Lagerung der Sensoreinheit (10) umfasst, die eine schlitzartige Öffnung zum Verbindungsabschnitt (106) aufweist, über die die Sensoreinheit (10) in das Gehäuse (100) einlegbar ist.

2. Taktiler Sensor nach Anspruch 1, wobei die Sensoreinheit (10) im Gehäuse (100) dicht verschlossen angeordnet ist, wenn der Verbindungsabschnitt (106) mit einem Träger (108) gekoppelt ist.

3. Taktiler Sensor nach einem der Ansprüche 1 oder 2, wobei der Verbindungsabschnitt (106) mit einem Träger (108) mit einem definierten Profil koppelbar ist und Verbindungselemente (110) aufweist, die so geformt sind, dass diese in das Profil des Trägers (108) eingreifen können, um eine schmutz- und wasserdichte Verbindung zwischen dem Verbindungsabschnitt (106) und dem Profil herzustellen.

4. Taktiler Sensor nach Anspruch 3, wobei die Verbindungselemente so ausgebildet sind, dass diese auseinandergespreizt werden können, um an dem Profil des Trägers montiert zu werden.

5. Taktiler Sensor nach einem der Ansprüche 1 bis 4, wobei das Gehäuse einen dicht verschließbaren Anschlussbereich aufweist, über den elektrische Kontakte zu der Sensoreinheit (10) geführt werden können, und der dicht verschließbare Anschlussbereich ein Klemmteil zum Abdichten aufweist oder nachträglich durch Vergießen verschließbar ist.

6. Taktiler Sensor nach einem der Ansprüche 1 bis 5, wobei sich der Kompressionskörper (104) über den gesamten aktiven Bereich der Sensoreinheit (10) erstreckt und dazu ausgebildet ist, eine Kraft gleichmäßig auf die Sensoreinheit (10) zu übertragen.

7. Taktiler Sensor nach einem der Ansprüche 1 bis 6, wobei der Kompressionskörper (104) eine gekrümmte Oberfläche (122) aufweist, die eine direkte Kraftübertragung ermöglicht, um eine hohe Sensitivität des Sensors zu erreichen.

8. Taktiler Sensor nach einem der Ansprüche 1 bis 7, wobei das Gehäuse (100) aus geschäumtem Polyurethan mit einer verdichteten Oberfläche gefertigt ist.

9. Taktiler Sensor nach einem der Ansprüche 1 bis 8, wobei das Gehäuse (100) so dimensioniert ist, dass eine Länge des Gehäuses mindestens ein zweitstelliges Vielfaches einer Breite, insbesondere einer Breite und einer Höhe des Gehäuses ist, wobei die Längsrichtung L die Länge des Gehäuses definiert und der Verbindungsabschnitt (106), der Grundkörper (102) und der Kompressionskörper (104) übereinander angeordnet die Höhe des Gehäuses definieren.

10. Taktiler Sensor nach einem der Ansprüche 1 bis 9, wobei eine Breite des Sensors kleiner als 1 cm und vorzugweise kleiner 0,7 cm und insbesondere 0,5 cm ist.

11. Mittel zum Verschließen einer Öffnung umfassend einen ersten Teil (128) mit einer ersten Seitenkante (135), einen zweiten Teil (130) mit einer in Bezug zur ersten Seitenkante (135) beweglichen zweiten Seitenkante sowie einen Sensor nach einem der Ansprüche 1 bis 10, der entlang der ersten oder zweiten Seitenkante, vorzugweise über die gesamte Länge der jeweiligen Seitenkante, angeordnet ist, um ein Verschließen des Mittels zu überwachen.

12. Mittel nach Anspruch 11, wobei die erste und zweite Seitenkante in einer geschlossenen Stellung so zueinander angeordnet sind, dass die Öffnung (126) lichtdicht verschlossen ist und wobei der Sensor so eingerichtet ist, das lichtdichte Verschließen zu verifizieren.

13. Mittel nach einem der Ansprüche 11 oder 12, wobei der Sensor dazu eingerichtet ist, beim Verschließen ein Hindernis in der Öffnung taktil zu detektieren.

## Claims

1. Tactile sensor with a sensor unit (10) that comprises a first layer (12) with a first electrode (18), a second layer (14) with a second electrode (20) and an intermediate layer (16) of pressure-sensitive material (22) that spaces the first electrode (18) apart from the second electrode (20), and with a housing (100) in which the sensor unit (10) is disposed,
wherein at least the first electrode (18) is made of conductive yarn and the sensor unit (10) extends along a longitudinal direction L defined by the conductive yarn,
wherein the first and second electrodes (18, 20) define, together with the pressure-sensitive material (22), an active region of the sensor unit (10) that is configured such that a compression of the pressure-sensitive material (22) in the active region leads to a change in an electrical property between the first and second electrodes (18, 20) which can be detected by an evaluation unit,
wherein the housing (100) comprises a main body (102), a compression body (104) and a joining section (106), wherein the main body (102) is configured to receive the sensor unit (10), the compression body (104) is configured to transfer a mechanical force acting thereon to the sensor unit (10), and the joining section (106) is configured to couple the housing to a support (108), and
wherein the housing (100) with main body (102), compression body (104) and joining section (106) extends along the longitudinal direction L and the housing (100) is formed in one piece from an elastic material, and
wherein the main body (102) comprises a receptacle (120) for supporting the sensor unit (10), said receptacle comprising with respect to the joining section (106) a slot-like opening, via which the sensor unit (10) can be inserted into the housing (100).

2. Tactile sensor according to claim 1, wherein the sensor unit (10) is arranged tightly closed in the housing (100) if the joining section (106) is coupled to a support (108).

3. Tactile sensor according to any one of claim 1 or 2, wherein the joining section (106) can be coupled to a support (108) with a defined profile and comprises connecting elements (110) which are shaped such that they can engage in the profile of the support (108) in order to produce a dirt-tight and watertight connection between the joining section (106) and the profile.

4. Tactile sensor according to claim 3, wherein the connecting elements are designed such that they can be spread apart in order to be mounted on the profile of the support.

5. Tactile sensor according to any one of claims 1 to 4, wherein the housing comprises a tightly closable connection region via which electrical contacts to the sensor unit (10) can be fed, and the tightly closable connection region comprises a clamping part for sealing or can be subsequently closed by potting.

6. Tactile sensor according to any one of claims 1 to 5, wherein the compression body (104) extends over the entire active region of the sensor unit (10) and is further configured to transfer a force uniformly to the sensor unit (10).

7. Tactile sensor according to any one of claims 1 to 6, wherein the compression body (104) comprises a curved surface (122) which allows direct force transfer in order to achieve a high sensitivity of the sensor.

8. Tactile sensor according to any one of claims 1 to 7, wherein the housing (100) is produced from foamed polyurethane with a compacted surface.

9. Tactile sensor according to any one of claims 1 to 8, wherein the housing (100) is dimensioned such that the length of the housing is at least a double-digit multiple of the width, in particular the width and the height, of the housing, wherein the longitudinal direction L defines the length of the housing and the joining section (106), the main body (102) and the compression body (104) arranged above one another define the height of the housing.

10. Tactile sensor according to any one of claims 1 to 9, wherein the width of the sensor is less than 1 cm and preferably less than 0.7 cm and in particular 0.5 cm.

11. Means for closing an opening comprising a first part (128) with a first lateral edge (135), a second part (130) with a second lateral edge which is movable with respect to the first lateral edge (135), and a sensor according to any one of claims 1 to 10, that is disposed along the first or second lateral edge, preferably over the entire length of the respective lateral edge, in order to monitor a closing of the means.

12. Means according to claim 11, wherein the first and second lateral edge are arranged with respect to one another in a closed position such that the opening (126) is closed in a light-tight manner and wherein the sensor is configured to verify the light-tight closing.

13. Means according to any of claims 11 or 12, wherein the sensor is configured to detect an obstacle in the opening in a tactile manner during closing.

## Revendications

1. Capteur tactile pourvu d'une unité de capteur (10) qui comporte une première couche (12) pourvue d'une première électrode (18), une deuxième couche (14) pourvue d'une deuxième électrode (20) et une couche intermédiaire (16) en matériau sensible à la pression (22) qui espace la première électrode (18) de la deuxième électrode (20), et pourvu d'un boîtier (100) dans lequel est disposée l'unité de capteur (10),
dans lequel au moins la première électrode (18) est constituée d'un fil conducteur et l'unité de capteur (10) s'étend le long d'une direction longitudinale L définie par le fil conducteur,
dans lequel les première et deuxième électrodes (18, 20) définissent, conjointement avec le matériau sensible à la pression (22), une zone active de l'unité de capteur (10), qui est réalisée de telle manière qu'une compression du matériau sensible à la pression (22) dans la zone active conduise à une modification d'une propriété électrique entre les première et deuxième électrodes (18, 20), laquelle modification peut être détectée par une unité d'évaluation,
dans lequel le boîtier (100) comporte un corps de base (102), un corps de compression (104) et une section de liaison (106),
dans lequel le corps de base (102) est conçu pour recevoir l'unité de capteur (10), le corps de compression (104) est conçu pour transmettre une force mécanique agissant sur lui à l'unité de capteur (10), et la section de liaison (106) est conçue pour coupler le boîtier à un support (108),
dans lequel le boîtier (100) comportant le corps de base (102), le corps de compression (104) et la section de liaison (106) s'étend dans la direction longitudinale L et le boîtier (100) est formé d'un seul tenant en un matériau élastique,
dans lequel le corps de base (102) comporte en outre un logement (120) pour l'installation de l'unité de capteur (10), lequel logement présente une ouverture en forme de fente donnant sur la section de liaison (106), par l'intermédiaire de laquelle l'unité de capteur (10) peut être introduite dans le boîtier (100).

2. Capteur tactile selon la revendication 1, dans lequel l'unité de capteur (10) est disposée dans le boîtier (100) de manière étanche lorsque la section de liaison (106) est couplée à un support (108).

3. Capteur tactile selon l'une des revendications 1 ou 2, dans lequel la section de liaison (106) peut être couplée à un support (108) présentant un profil défini et comporte des éléments de raccordement (110) qui sont formés de manière à s'engager dans le profil du support (108) pour former une liaison étanche à la salissure et à l'eau entre la section de liaison (106) et le profil.

4. Capteur tactile selon la revendication 3, dans lequel les éléments de liaison sont formés de manière à pouvoir être écartés afin d'être montés sur le profil du support.

5. Capteur tactile selon l'une des revendications 1 à 4, dans lequel le boîtier comprend une zone de raccordement pouvant être fermée de manière étanche, par l'intermédiaire de laquelle des contacts électriques peuvent être guidés vers l'unité de capteur (10), et la zone de raccordement pouvant être fermée de manière étanche comporte une pièce de serrage destinée à l'étanchéité ou peut être fermée ultérieurement par encapsulation.

6. Capteur tactile selon l'une des revendications 1 à 5, dans lequel le corps de compression (104) s'étend sur toute la zone active de l'unité de capteur (10) et est conçu pour transmettre uniformément une force à l'unité de capteur (10).

7. Capteur tactile selon l'une des revendications 1 à 6, dans lequel le corps de compression (104) présente une surface incurvée (122) qui permet la transmission directe d'une force afin d'obtenir une sensibilité élevée du capteur.

8. Capteur tactile selon l'une des revendications 1 à 7, dans lequel le boîtier (100) est constitué de mousse de polyuréthane pourvue d'une surface compactée.

9. Capteur tactile selon l'une de revendications 1 à 8, dans lequel le boîtier (100) est dimensionné de telle manière qu'une longueur du boîtier soit au moins un multiple à deux chiffres d'une largeur, en particulier d'une largeur et d'une hauteur du boîtier, dans lequel la direction longitudinale L définit la longueur du boîtier et la section de liaison (106), le corps de base (102) et le corps de compression (104) disposés l'un au-dessus de l'autre définissent la hauteur du boîtier.

10. Capteur tactile selon l'une des revendications 1 à 9, dans lequel une largeur du capteur est inférieure à 1 cm et de préférence inférieure à 0,7 cm et en particulier à 0,5 cm.

11. Moyen destiné à fermer une ouverture comprenant une première partie (128) présentant un premier bord latéral (135), une deuxième partie (130) présentant un deuxième bord latéral mobile par rapport au premier bord latéral (135), et un capteur selon l'une quelconque des revendications 1 à 10, qui est disposé le long du premier ou du deuxième bord latéral, de préférence sur toute la longueur du bord latéral respectif, pour surveiller la fermeture dudit moyen.

12. Moyen selon la revendication 11, dans lequel les premier et deuxième bords latéraux, en position fermée, sont disposés l'un par rapport à l'autre de telle sorte que l'ouverture (126) soit fermée de manière étanche à la lumière et dans lequel le capteur est conçu pour vérifier la fermeture étanche à la lumière.

13. Moyen selon l'une des revendications 11 ou 12, dans lequel le capteur est conçu pour détecter de manière tactile une obstruction présente dans l'ouverture lors de la fermeture.
